# EUROPÄISCHE PATENTSCHRIFT

(11) **EP 1 133 452 B1**
(45) Veröffentlichungstag und Bekanntmachung des Hinweises auf die Patenterteilung: **11.09.2002**
(21) Anmeldenummer: 99950671.0
(22) Anmeldetag: 08.10.1999
(51) Int. Cl.: C03B 13/08, C03B 13/14, C03B 13/16, C03B 23/02

(54) **FORMGEBUNGSWERKZEUG MIT STRUKTURIERTER OBERFLÄCHE ZUM ERZEUGEN VON STRUKTUREN AUF GLAS UND SEINE ANWENDUNG BEI DER STRUKTURIERUNG VON KANALPLATTEN**
SHAPING TOOL WITH A STRUCTURED SURFACE FOR PRODUCING STRUCTURES ON GLASS, AND THE APPLICATION THEREOF FOR STRUCTURING CHANNEL PLATES
OUTIL DE FORMAGE A SURFACE STRUCTUREE POUR PRODUIRE DES STRUCTURES SUR DU VERRE, ET UTILISATION DUDIT OUTIL POUR STRUCTURER DES PANNEAUX CANNELES

(30) Priorität: 15.10.1998 DE 19847549
(43) Veröffentlichungstag der Anmeldung: 19.09.2001
(73) Patentinhaber: Schott Glas, 55122 Mainz (DE); Carl Zeiss Stiftung Trading as Schott Glaswerke, 55122 Mainz (DE)
(72) Erfinder: SINGER, Rudolf, D-55270 Engelstadt (DE); DISAM, Joachim, D-55116 Mainz (DE); BAUM, Christiane, D-07743 Jena (DE)
(74) Vertreter: Fuchs Mehler Weiss & Fritzsche
(86) Internationale Anmeldenummer: EP9907545
(87) Internationale Veröffentlichungsnummer: WO00021894

(56) Entgegenhaltungen:
- EP-A- 0 866 487
- DE-A- 19 713 312
- DE-C- 19 713 309

## Beschreibung

Die Erfindung bezieht sich auf ein Formgebungswerkzeug mit strukturierter Oberfläche zum Erzeugen von Strukturen auf Glas im Rahmen eines Heißformgebungsverfahrens, das insbesondere für die Ausbildung von Präzisionsstrukturen in einer Kanalplatte von Flachbildschirmen angewendet wird.

Mit Präzisionsstrukturen versehenes Flachglas wird für Präzisionsanwendungen, insbesondere im Bereich der Gläser mit optischen Funktionen, benötigt. Derartige Gläser sind beispielsweise Displayscheiben von neueren Flachbildschirmgenerationen (Plasma Display Panel = PDP: Plasma Addressed Liquid Crystal = PALC). In die sogenannte Kanalplatte dieser Flachbildschirmgläser werden Mikrokanalstrukturen für die Ansteuerung einzelner Zeilen oder Spalten eingebracht, die sich über die gesamte aktive Bildschirmbreite oder -höhe erstrecken und in denen über eine elektrische Entladung Plasma gezündet wird. Die beidseitige Begrenzung eines einzelnen Kanals wird über rechteckige Stege realisiert, deren Breite möglichst gering ist. Um ein ausreichendes Entladungsvolumen zu erhalten, ist die Höhe der Stege wesentlich größer als deren Breite. Der Abstand der Stege sollte möglichst gering sein.

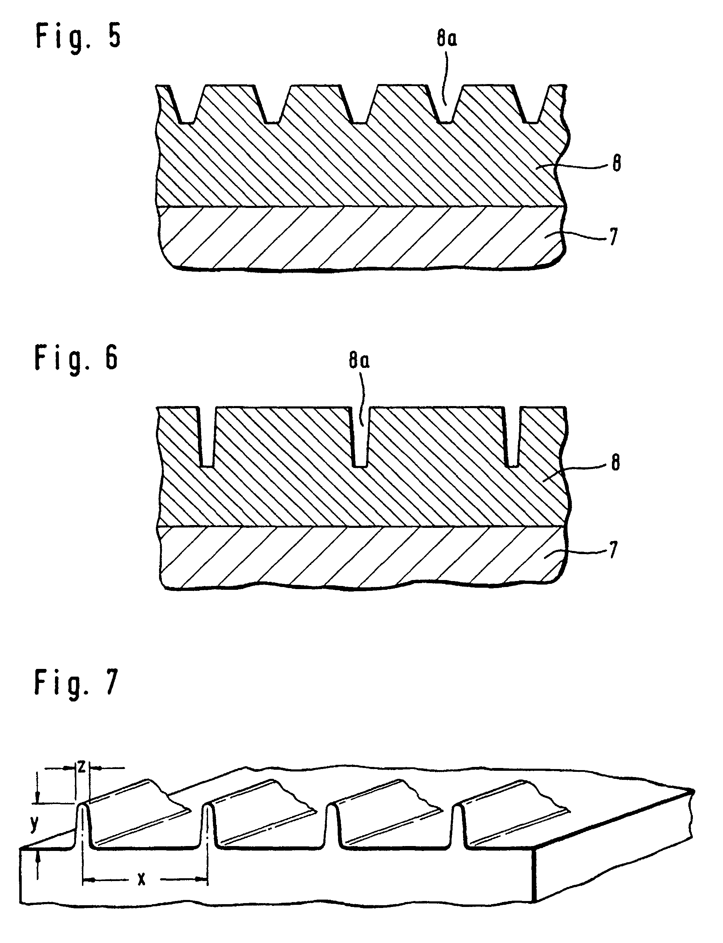

Die Kanalplatte stellt somit die mikrostrukturierte Glasrückplatte eines PALC- bzw. PDP-Displays dar. Sie ist ausschnittsweise in Fig. 7 im stark vergrößerten Maßstab prinzipiell dargestellt.

Die in dieser Fig. dargestellte kanalförmige Mikrostrukturierung muß kostengünstig und in großen Stückzahlen für verschiedene Displaygrößen (Bildschirmdiagonalen bis 55") erfolgen. Für ein 42"-HiVision PDP-Display sind beispielsweise ca. 5760 Kanäle mit einem Pitch "X" von ca. 161 µm bei einer Steghöhe Y von 150 µm und einer Stegbreite "Z" von 30-50 µm mit Toleranzen von wenigen µm über ca. 520 mm Länge zu fertigen. Diese enorm hohen Spezifikationsanforderungen bedingen ein hochpräzise arbeitendes Verfahren bzw. eine entsprechende Vorrichtung.

Es ist bekannt, mittels Heißformgebungstechniken auf der Basis eines Formgebungswerkzeuges mit strukturierter Oberfläche Strukturen auf Glas zu erzeugen.

Konventionelle Heißformgebungsverfahren, sogenannte urformende Verfahren, sind derart konzipiert, daß heißes (flüssiges) Glas aus der Schmelze durch ein gekühltes Formgebungswerkzeug, das in das flüssige Glas gepreßt wird, die gewünschte Form erhält. Hierbei übernimmt das Formgebungswerkzeug die Funktion der "Erstarrungsformgebung", d.h. das Glas besitzt vor dem Werkzeugkontakt eine Temperatur oberhalb des Transformationsbereiches (T_{g}) und wird durch die Berührung mit dem Formgebungswerkzeug so gekühlt, daß sich das Negativ der strukturierten Oberfläche des Formgebungswerkzeuges formstabil im Glas abbildet.

Die Erfindung geht von einem anderen Heißformgebungsverfahren aus, das als umformende Warmformgebung charakterisiert werden kann. Bei diesem umformenden Formgebungsverfahren liegt die Temperatur des Glases vor dem Kontakt mit dem Formwerkzeug mit strukturierter Oberfläche, gegebenenfalls unterhalb des Transformationsbereiches und wird erst durch Berührung mit dem Formgebungswerkzeug auf den, zur Formgebung notwendigen, Temperaturbereich (T > T_{g}) angehoben. Entscheidend hierbei ist, daß jeweils nur eine lokale Erwärmung des jeweils zu strukturierenden Bereiches stattfindet. Auch bei diesem umformenden Verfahren verläßt das Glas in seiner strukturierten Form das Formgebungswerkzeug im formstabilen Zustand.

Physikalische Größen, die sowohl das konventionelle Heißformgebungs-Verfahren als auch das umformende Warmformgebungs-Verfahren bezüglich des Prozeßablaufs betreffen, sind:
- die Temperatur des Glases und des Formgebungswerkzeuges,
- die Druckbelastung auf das Glas und das Formgebungswerkzeug,
- die Zeit des Kontaktes von Glas und Formgebungswerkzeug (Verweilzeit).

Nachstehende Betrachtung zur Verweilzeit möge dies verdeutlichen:

Findet eine Kontaktierung des Glases mit dem Formgebungswerkzeug nur kurzzeitig statt, d.h. vor der Erstarrung wird das Formgebungswerkzeug vom Glas entfernt, so entstehen aufgrund des Zerfließens der Glasstruktur nach der Kontaktierung starke Verrundungen in der Struktur.

Bei einer langzeitigen Kontaktierung treten durch starke Temperaturunterschiede und unterschiedlicher thermischer Dehnungen von Formgebungswerkzeug und Glas nicht toleriebare laterale Spannungen auf, die die Präzision der Strukturen, d.h. die Positionier- und Reproduziergenauigkeit der Kanäle bei Kanalplatten, nachteilig beeinflussen.

Ein Formgebungswerkzeug, welches einer genauen Prozeßführung genügen will, muß eine unabhängige Einstellung/Regelung der vorstehend aufgeführten Größen gewährleisten.

Die bekannten Heißformgebungswerkzeuge genügen diesen Anforderungen nicht. Durch ihren konventionellen massiven Aufbau mit Chrom-Nickelstählen, der eine vollständige Aufheizung des gesamten Formgebungswerkzeuges notwendig macht, haben sie zudem eine ungenügende thermische Formstabilität, da bereits bei relativ kleinen Temperaturschwankungen im Formgebungswerkzeug relativ hohe Längenänderungen an den formgebenden Strukturen auftreten, die die zulässigen Toleranzen bei der Ausbildung der Kanäle bzw. Stege überschreiten.

Das gleiche gilt für das durch die DE-C1-197 13 309 sowie die DE-A1-197 13 312 bekannt gewordene Formgebungswerkzeug mit strukturierter Oberfläche zum Erzeugen von Strukturen auf Glas nach dem Prinzip der umformenden Warmformgebung, das im Ausführungsbeispiel einen Walzzylinder, bestehend aus einem massiven Zylinder aus vorzugsweise nichtmetallischem Material aufweist, auf den ein Formwerkzeug mit der strukturgebenden Oberfläche relativ locker anliegend aufgespannt ist. An den beiden Stirnseiten des massiven Zylinders ist jeweils ein Lagerzapfen für die Dreh-Halterung des Walzzylinders angebracht. Für die notwendige lokale Beheizung des Formgebungswerkzeuges ist eine äußere Heizquelle vorgesehen.

Eine derartige Ausbildung des Formgebungswerkzeuges ermöglicht in der Praxis nicht das Erzeugen von Präzisionsstrukturen mit der gewünschten, reproduzierbaren Genauigkeit, da der notwendigen thermischen Formstabilität bei dem Aufbau der einzelnen Komponenten sowie bei der Lagerung des Walzzylinders noch nicht genügend Rechnung getragen wurde. Es können daher nicht die eingangs beschriebenen enorm hohen Spezifikationsforderungen erfüllt werden.

Auch mit dem durch die EP-A1-0 866 487 bekannt gewordenen Formgebungswerkzeug lassen sich nicht die eingangs beschriebenen enorm hohen Spezifikationsforderungen erfüllen.

Dieses bekannte Formgebungswerkzeug weist einen massiven Walzzylinder aus einer Metalllegierung auf, auf dessen Umfangsoberfläche die formgebenden Strukturen unmittelbar ausgeformt sind. Über die Drehlagerung des Walzzylinders ist in der EP-Schrift keine Aussage gemacht. Durch eine äußere Wärmequelle wird das Glassubstrat plastifiziert, bevor durch den selbst nicht direkt beheizten Walzzylinder in Verbindung mit einer Gegenwalze die gewünschte Struktur in das Glassubstrat eingeprägt wird.

Auch diese EP-Schrift macht keine Aussagen zu der notwendigen Feinabstimmung der thermischen Ausdehnungskoeffizienten und der Lagerung des Walzzylinders, um die notwendige thermische Formstabilität zu erreichen. Es treten insbesondere durch den massiven Walzzylinder ebenfalls bereits bei kleinen Temperaturschwankungen relativ hohe Längenänderungen in den formgebenden Strukturen auf, die die zulässigen Toleranzen bei der Ausbildung der Kanäle bzw. Stege überschreiten.

Das Herstellen von Kanalplatten mittels Formgebungswerkzeugen mit strukturierten Oberflächen hat daher bisher in der Praxis keinen Eingang gefunden.

Die Fertigung der Kanalplatten erfolgt daher derzeit im allgemeinen über ein Siebdruckverfahren, wobei zwischen 10-20 Glaslotschichten Schicht für Schicht auf dem Glassubstrat abgeschieden werden.

Dieses Verfahren hat folgende Nachteile:
- hohe Prozeßzeiten
- hohe Lotkosten
- ungleichmäßiges Aussintern der Kanalplatten
- Umweltbelastung (Pb im Lot, Ätzlösungen)
und erlaubt daher aus wirtschaftlicher Sicht nur die Fertigung von Prototypen, d.h. es ist für eine wirtschaftliche Serienfertigung nicht geeignet.

Der Erfindung liegt die Aufgabe zugrunde, ein Formgebungswerkzeug mit strukturierter Oberfläche zum Erzeugen von Strukturen auf Glas zu schaffen, das auf wirtschaftliche Weise das Ausformen von hochpräzisen Mikrostrukturen in Glas durch eine lokale Erwärmung des zu strukturierenden Glasbereiches nach dem Prinzip der umformenden Warmformgebung ermöglicht.

Die Lösung dieser Aufgabe gelingt gemäß der Erfindung durch ein solches Formgebungswerkzeug mit:
- einem Walzzylinder, bestehend aus einem metallischen Hohlzylinder, auf dessen Außenmantel ein formgebendes Blech, das mit Ausnehmungen entsprechend dem Negativ der aufzubringenden Glasstrukturen versehen ist, im innigen flächigen Kontakt aufgebracht ist,
- einer Welle zum kontinuierlichen Antrieb des Walzzylinders, die sich durch den metallischen Hohlzylinder hindurcherstreckt,
- zwei Mitnehmern, die auf Höhe der Stirnseiten des metallischen Hohlzylinders auf der Welle fest angebracht sind und formschlüssig mit dem Hohlzylinder im Wirkeingriff sind, und
- einer elektrischen Heizung, die elektrisch isoliert zwischen der Welle und dem metallischen Hohlzylinder angeordnet ist, mit einer zusätzlichen thermischen Isolierung zur Welle.

Durch den erfindungsgemäßen Aufbau des Heißformgebungswerkzeuges ist es auf wirtschaftliche Weise durch einfaches Abrollen auf dem Glassubstrat möglich, hochpräzise Mikrostrukturen auf dem Glas durch eine gezielte lokale Erwärmung des zu strukturierenden Glases beim Kontakt mit dem Glas auszuformen.

Eine maßgebende Rolle für die Erzielung einer gleichbleibenden Umformungstemperatur kommt dabei dem metallischen Hohlzylinder zu, der durch seine Wärmekapazität ein zu schnelles Abkühlen beim Kontakt mit dem Glas verhindert. Dieser Effekt wird gemäß einer Ausgestaltung der Erfindung unterstützt, wenn der Werkstoff des metallischen Hohlzylinders eine Nickel-Knet-Legierung ist.

Gemäß einer Weiterbildung der Erfindung wird die Drehmomentübertragung zwischen der Welle und dem Walzzylinder dadurch hergestellt, daß die Mitnehmer mindestens drei trapezförmige Klauen, symmetrisch verteilt, aufweisen und an der Stirnseite des metallischen Hohlzylinders komplementäre trapezförmige Ausnehmungen ausgebildet sind, die mit den Klauen mit kleinen Anlageflächen im gegenseitigen Wirkeingriff stehen. Diese Ausbildung verhindert einen zu großen Wärmeabfluß von dem Walzzylinder in die Welle. Die Konstruktion ist dabei spielfrei bei Temperaturschwankungen innerhalb des Bauteils und bei Temperaturunterschieden von Walzzylinder zu Mitnehmer. Dadurch sind die Rundlaufgenauigkeiten gewährleistet bzw. sind immer gleich.

Aus fertigungstechnischen Gründen sind zweckmäßig vier um 90° versetzte Klauen vorgesehen, jedoch ist prinzipiell jede beliebige Zahl von Klauen größer als drei möglich. Je mehr Klauen vorhanden sind, umso mehr entspricht die Verbindung einer Verzahnung.

Weitere Ausgestaltungen der Erfindung, insbesondere die Anordnung der Heizung, sind in den Unteransprüchen gekennzeichnet.

Weitere Merkmale sowie Vorteile der Erfindung ergeben sich ferner aus der Beschreibung von in den Zeichnungen dargestellten Ausführungsbeispielen der Erfindung.

Es zeigen:
- Fig. 1: in einer Längsschnittdarstellung den Aufbau der erfindungsgemäßen Heißformgebungswalze mit strukturgebundenem Walzzylinder, Mitnehmer, Welle und Heizung,
- Fig. 1 A: eine Schnittansicht durch die Walze nach Fig. 1, genommen entlang der Linie A-A,
- Fig. 2: einen vergrößerten Ausschnitt aus der Walze nach Fig. 1, in einer Draufsicht-Darstellung der Kopplung der Welle mit dem Walzzylinder über die Mitnehmer,
- Fig. 3: eine Darstellung der Heizung, die zwischen Welle und Walzzylinder des Formgebungswerkzeuges nach Fig. 1 angeordnet ist und der Aufheizung des Walzzylinders dient,
- Fig. 4: eine stirnseitige Front-Draufsicht auf das Formgebungswerkzeug nach Fig. 1 mit Darstellung der Schleifringkontakte für die Energiezufuhr zu der Heizung nach Fig. 3,
- Fig. 5: einen stark vergrößerten Ausschnitt aus dem strukturgebenden PtAu5-Blech, das die Walze umgibt, für eine PDP-Struktur,
- Fig. 6: eine Darstellung entsprechend Fig. 5, jedoch für eine PALC-Struktur, und
- Fig. 7: eine Ausschnittsdarstellung für eine strukturierte Kanalplatte mit bekannter Kanalstruktur.

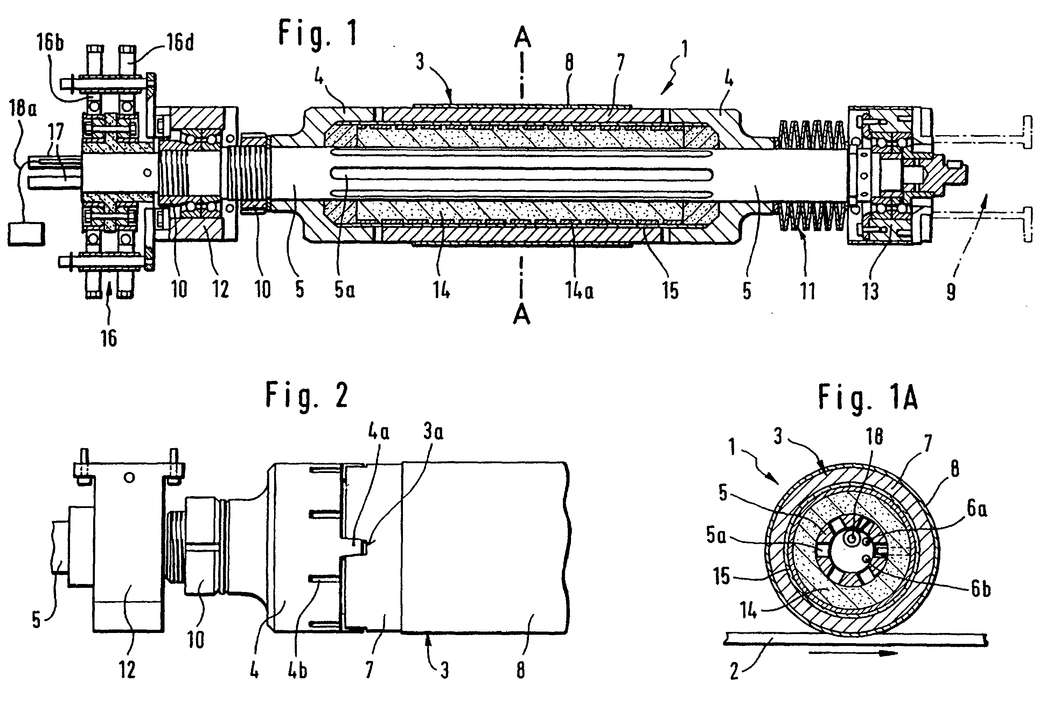

In der Fig. 1 ist in einer Längsschnitt-Darstellung der prinzipielle Aufbau einer bevorzugten Ausführungsform des erfindungsgemäßen Heißformgebungswerkzeuges gezeigt. Das Formgebungswerkzeug besitzt die Form einer generell mit 1 bezeichneten Walze, die unter hohem Preßdruck über ein zu strukturierendes Glassubstrat 2 (Fig. 1 A) kontinuierlich abgerollt wird, indem das Glassubstrat 2 in Pfeilrichtung unter der Formgebungswalze 1 durchgezogen wird.

An das Glassubstrat 2 sind besondere Anforderungen zu stellen.

Die Herstellung von Kanalplatten für Displaysysteme, an die sich die Erfindung bevorzugt wendet, benötigt in der Regel qualitativ hochwertige speziell entwickelte Glassubstrate 2, die sich durch prozeßrobustes Verhalten in allen Herstellungsschritten auszeichnen. Neben der extrem hohen Ebenheit der Glassubstrate, die letztlich für Kontrastschärfe und Bildauflösungsgüte verantwortlich ist, werden Temperaturbeständigkeit, chemische Resistenz, geringes Gewicht sowie ein angepaßtes thermisches Ausdehnungsverhalten gefordert.

Flacher, dünner und glatter, dabei möglichst inertes und prozeßrobustes Verhalten bei den komplizierten, je nach Displaytyp sehr unterschiedlich gearteten Verfahrensschritten sowie zu einem kostengünstigen Preis (in großen Abmessungen) verfügbar, so könnten trendmäßig verallgemeinert die Anforderungen an das ideale Glassubstrat für moderne Display-Technologien beschrieben werden.

Borosilicatgläser spielen dabei eine herausragende Rolle für eine Vielzahl technisch orientierter Glasapplikationen. Aufgrund einer unerschöpflichen Vielfalt an möglichen chemischen Zusammensetzungsvariationen können für diese Glasfamilie außergewöhnliche Eigenschaften erzielt werden. Besonders zeichnen sich diese Gläser durch hohe Temperaturbeständigkeit, geringe thermische Ausdehnung und gute chemische Resistenz gegen aggressive Medien aus. Darüber hinaus sind solche Gläser auch ohne Zugabe alkalischer Komponenten herstellbar. Diese besonderen Eigenschaften eröffnen den Zugang zu den neuen und technisch sehr anspruchsvollen modernen Flachglasapplikationen.

Aus dem beschriebenen Wirkprinzip der Flachbildschirme können folgende richtungsweisende Anforderungen an ein Glassubstrat für eine Kanalplatte abgeleitet werden:
- hohe Temperaturbeständigkeit (Tg ≥ 600° C)
- geringe Dichte (< 2,8 g/cm³)
- hohe chemische Beständigkeit
- hervorragende Oberflächenqualität (Planität, warp, waviness etc.)
- geringe Schrumpfung (≤ 20 ppm)
- kein "Thermal sag"
- optimale Anpassung der thermischen Ausdehnung
- hoher elektrischer Widerstand
- geringe Gaspermeabilität
- hohe Transmission
- ausreichende mechanische Festigkeit
- große Abmessungen
- preiswert
Neben dem Corning Overflow fusion Verfahren und der Down draw-Technologie gestattet vor allem die Float-Technologie die kostengünstige Herstellung großformatiger Glassubstrate mit hervorragenden Oberflächenqualitäten und an den Display-Herstellungsprozeß angepaßten Eigenschaften.

Die Ausbildung des Formgebungswerkzeuges 1 ist durch die eingangs aufgeführten spezifischen Anforderungen bestimmt.

Es handelt sich im wesentlichen um die Bereitstellung
- eines strukturierten Formgebungswerkzeuges zur Erzeugung der Glasstruktur,
- eines biegesteifen Formgebungswerkzeuges zur Aufnahme der Walzkräfte,
- eines Formgebungswerkzeuges zur kontinuierlichen Fertigung (was durch die Walzenstruktur erzielt wird)
- eines regelfähigen heißen Werkzeuges.

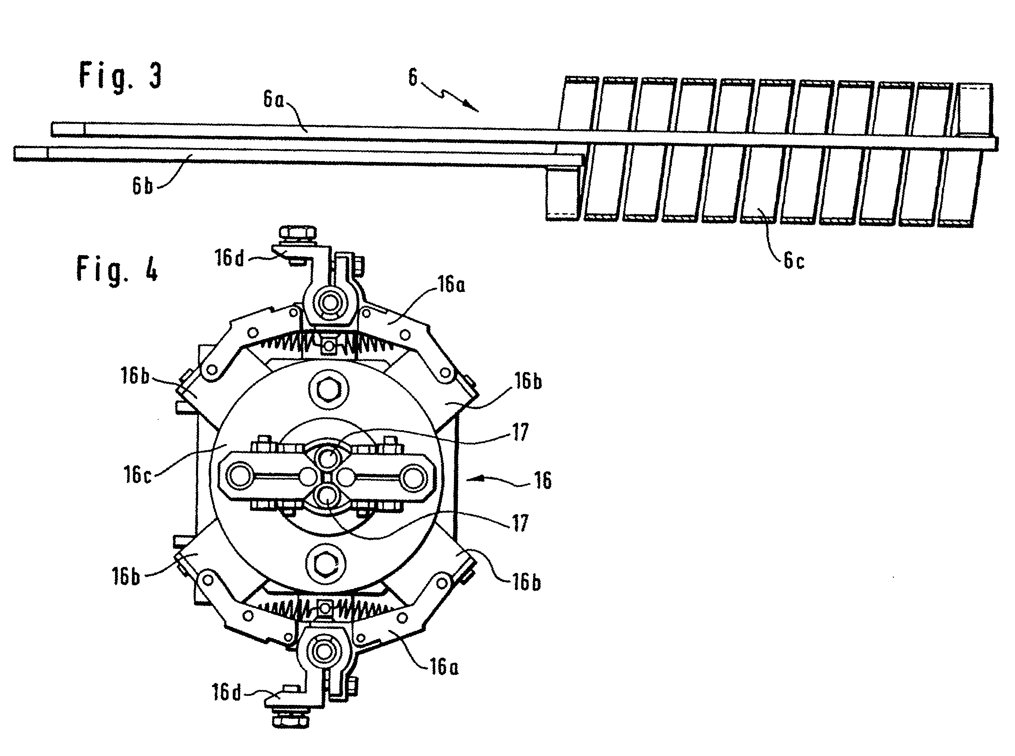

Diese Bedingungen werden durch die dargestellte, aus vier zentralen Komponenten aufgebaute Formgebungswalze 1 erfüllt. Diese vier zentralen Komponenten sind: ein Walzzylinder 3, zwei Mitnehmer 4, eine Welle 5 und eine Heizung 6, die der Übersichtlichkeit halber in der Fig. 3 gesondert dargestellt ist.

Der Walzzylinder 3 bildet den formgebenden Teil des Werkzeuges, da er das Negativ der zu erzeugenden Struktur trägt. Der Walzzylinder besteht zunächst aus einem tragenden metallischen Hohlzylinder 7, beispielsweise mit einer Länge von 300 mm, einem Außendurchmesser von 120 mm und einer Wandstärke von 12 mm.

Der Werkstoff des Walzzylinders ist vorzugsweise eine Nickel-Knetlegierung mit der Werkstoffnummer 2.4816. Der Vorteil einer Metallegierung gegenüber einem keramischen Werkstoff ist der hohe Wärmeausdehnungkoeffizient von Metallen, welcher gegenüber Keramiken eine kleine Differenz zu Glaskoeffizienten aufweist. Folgende Tabelle zeigt beispielsweise Differentialausdehnungskoeffizienten einsetzbarer Werkstoffe:

| Werkstoffgruppe | Werkstoff | Differentialausdehnungskoeffizient bei 800° C | Differenz des Differentialausdehnungskoeffizient zum Glaskoeffizienten |
|---|---|---|---|
| Glas | AF45 | α_{800°C}≈ 37·10⁻⁶/K | |
| Keramik | Quarzal | α_{800°C}≈0,5·10⁻⁶/K | Δα_{800°C}≈36,5·10^{-6/K} |
| Metall | Inconel | α_{800°C}≈20·10⁻⁶/K | Δα_{800°C}≈17·10⁻⁶/K |

Treten während des Walzens Temperaturschwankungen auf, so ist die Maßabweichung des Produktes aufgrund der kleinen Differenz der Ausdehnungskoeffizienten von metallischer Walze und Glas geringer als bei Einsatz einer keramischen Walze.

Die nachfolgende Berechnung soll den Sachverhalt verdeutlichen.

Die Toleranz einer Struktur im Glas über eine Substratlänge von 100 mm soll beispielsweise maximale ± 10µm betragen. In dem zulässigen Betrag der Temperaturschwankungen läßt sich deutlich der Vorteil einer metallischen gegenüber einer keramischen Walze erkennen. Für das metallische Werkzeug ist immerhin eine Temperaturdifferenz von ±4,8 °K möglich, wohingegen ein keramisches Werkzeug nur eine Schwankung der Temperatur von ±2,8 °K zuläßt. Maßabweichungen aufgrund von inhomogener Temperaturverteilung im Werkzeug können durch eine korrigierende Konturauslegung (z.B. konvexe oder konkave Form der Mantelfläche) beseitigt werden.

Auf der Außenoberfläche des metallischen Hohlzylinders 7 ist über dessen gesamten Umfang und beispielsweise einer Länge von 200 mm ein Blech 8 mit beispielsweise einer Stärke von 1 mm aufgebracht, in das das Negativ der geforderten Glasstruktur eingearbeitet ist. Aus Maßstabsgründen sind diese Negativ-Konturen in Fig. 1 nicht darzustellen. Sie ergeben sich aus den stark vergrößerten Ausschnittsdarstellungen gemäß den Figuren 5 und 6, und zwar in Fig. 5 für eine PDP-Kanalstruktur und in Fig. 6 für eine PALC-Struktur. Die Ausnehmungen in dem Blech 8 sind daher komplementär zu den Stegen an der Kanalplatte gemäß Fig. 7.

Ein für die Prozeßfähigkeit und die Wirtschaftlichkeit wichtiger Punkt ist der Werkstoff für das Blech 8.

Werkzeuge, deren Einsatz im Bereich der Heißformgebung von Glas liegt, stellen nämlich extrem hohe Anforderungen an das zu verwendende Werkzeugmaterial. Bei der Werkstoffauswahl müssen daher folgende Kriterien berücksichtigt werden:
- keine Klebeneigung zum Glas
- keine Korrosion bzw. Oxydation
- hohe Warmfestigkeit (Zeitstandfestigkeit)
- geringer Verschleiß
- preiswert.

Für das Walzwerkzeug 1 nach Fig. 1, welches zur Mikrostrukturierung von Glas eingesetzt werden soll, müssen weitere Forderungen erfüllt werden:
- mikrostrukturierbar
- beheizbar (gute Wärmeleitung).

Werkstoffkundliche Untersuchungen und langjährige Erfahrungen bei der Herstellung von Formwerkzeugen für die Hohlglasformgebung zeigten, daß Platin bzw. Platinlegierungen, beispielsweise PtAu5 Legierungen, mit einen reinen PtAu5-Material oder alternativ mit einem oxiddispergiertem PtAu5-Material (ODS), die gestellten Forderungen nach geringer Klebeneigung zum Glas sowie geringer Korrosion bzw. Oxydation am ehesten erreichen.

Allerdings haben diese Materialien eine geringe Warmfestigkeit, sind nicht optimal verschleißfest und sind zudem sehr teuer. Die geringe Warmfestigkeit, die einen Verlust der Strukturtreue im Walzwerkzeug hervorruft, zeigt sich im entsprechenden Maße nachteilig auch in der Glasstruktur.

Der durch die geringe Härte des PtAu5-Werkstoffes hervorgerufene Materialverschleiß bietet jedoch andererseits als wichtigen Vorteil die Möglichkeit zur mechanischen, spanenden Bearbeitung der Strukturierung. Die Forderung nach einer erhöhten Abriebfestigkeit führt zu entsprechenden Schwierigkeiten bei der Mikrostrukturierung, die jedoch die wesentliche Voraussetzung für den Einsatz der Walze darstellt. Hier gilt es für den Fachmann, den für den jeweiligen Anwendungszweck optimalen Kompromiß zu finden.

Anstelle der PtAu5-Legierung ist es auch denkbar, in der Glasindustrie eingesetzte Werkstoffe, die zur Verringerung ihrer Klebeneigung bzw. zur Erhöhung der Verschleißfestigkeit beschichtet sind, als Werkzeugmaterial einzusetzen.

Folgende Werkstoffkombinationen sind denkbar:

| bulk-Materialien: | Inconel | Schichtmaterialien: | SiC |
|---|---|---|---|
| | Nicrofer | | BC/N |
| | Nimonic | | TiC/N |
| | Udimet | | TiAIN |
| | Incoloy | | MoS₂ |
| | PM 2000 | | Pt, Au-Legierungen |
| | | | Ni-P |
| | | | Hartgold |

Anzustreben ist dabei jeweils eine Werkstoffkombination, die zu einem verschleißfesten, mikrostrurierbaren, wärmeleitenden Material mit geringer (bzw. keiner) Klebeneigung zum Glas führt.

Zur Verbesserung der Verträglichkeit Werkzeug/Glas und des Verschleißes der Oberfläche muß das Blech sehr innig mit dem metallischen Basis-Hohlzylinder 7 verbunden werden.

Gemäß einer besonderen Ausführungsform ist das Blech 8 heiß isostatisch aufgepreßt (gehipt). Es handelt sich hierbei um ein flächiges Diffusionsschweißen, welches einen vollkommenen Stoffschluß beinhaltet.

Anstatt der heiß isostatischen Pressung sind prinzipiell jegliche Verfahren zur Oberflächenveredelung einsetzbar, wobei die entsprechenden metallischen, keramischen oder gradierten Schichten vor der Strukturierung mit der Negativstruktur oder danach aufgebracht werden können.

Die Ausbildung der Strukturen im Blech 8 beeinflußt maßgebend die Qualität der zu erzeugenden Glasstrukturen, denn zur Einbringung der Mikrostrukturen in das Glassubstrat ist ein Fließen des Glases in die Walzennuten 8 a (Fig. 5/6) notwendig. Daher hat die Beschaffenheit der Mikrostruktur (umlaufende Nuten im Werkzeug) einen großen Einfluß auf mögliche mechanische Verankerungen der Glasmasse beim Formgeben. Aus diesem Grund sind extrem glatte Kanalflanken ohne Hinterschneidungen von enormer Bedeutung für einen erfolgreichen Heißformgebungsprozeß. Eine weitere Forderung besteht in einer minimalen Rauhigkeit der Werkzeugoberfläche, da sich beim Walzvorgang die Werkzeugstruktur und darin enthaltene Aufrauhungen bzw. Fehlstellen exakt im verformten Glas abbilden.

Zusammenfassend werden folgende Anforderungen an das strukturierte Walzwerkzeug gestellt:
- exakte geometrische Negativ-Abbildung der geforderten Glasstruktur
- hohe Ebenheit sowie geringe Rauhigkeit der Kanalflanken und der Oberfläche
- Einhaltung eines erforderlichen Entformungswinkels

Die Mikrostrukturierung des Walzenkörpers 1 ist im wesentlichen von der Bearbeitbarkeit des Materials des Bleches 8 abhängig. Generell sind folgende Verfahren denkbar:
- Laserbearbeitung • Prägen
- Drahterodieren • Fräsen
- Schleifen • Ätzen
- Drehen • Senkerodieren

Jedes Verfahren stellt unterschiedliche Forderungen an das zu strukturiende Material.

Dabei kommen in der Praxis insbesondere die nachstehenden Verfahren in Frage:
- Laserbearbeitung
- Erodieren
- Schleifen
- Präzisionsdrehen,
wobei dem Präzisionsdrehen mittels eines monokristallinen Naturdiamanten für die Mikrostrukturierung eine besondere Bedeutung beikommt, wie Versuche gezeigt haben.

Um den hohlen Walzzylinder 3 zu drehen, sind die bereits erwähnten Mitnehmer 4 vorgesehen, die auf der Welle 5 fest angeordnet sind.

Die Mitnehmer 4 dienen daher der Drehmomentübertragung zwischen der Welle 5 und Walzzylinder 3. Die Verbindung der Mitnehmer zum Walzzylinder 3 bilden jeweils vier trapezförmige Klauen 4 a (Fig. 2), die mit Spiel im Wirkeingriff mit vier trapezförmigen Nuten 3 a stehen, die an den beiden Enden des Walzzylinders 3, sich in radialer Richtung erstreckend, ausgebildet sind. Die Zahl vier ist nur beispielhaft. Es können auch drei, sechs oder acht Klauenpaare in symmetrischer Verteilung vorgesehen sein, oder irgendeine andere Zahl größer als drei.

Diese Klauen-Mitnahme mit Spalt ermöglicht zum einen durch ihre geometrische Gestalt axiale und radiale Wärmedehnungen, d.h. differente Wärmedehnungen zwischen Zylinder und Mitnehmer und läßt zum anderen nur geringe Wärmeverluste von Walzzylinder auf die Mitnehmer aufgrund der kleinen Anlageflächen zu.

Diese Mitnahme-Konstruktion erlaubt es mit großem Vorteil für die Genauigkeit der Mikrostrukturen, eine definierte Position des Walzzylinders trotz der erheblichen Wärmedehnungen zu realisieren.

Um ein Ankoppeln (Eintrag von induktiver Leistung) und den daraus folgenden Leistungsverlust zu minmieren, sind die Mitnehmer 4 auf der Walzzylinderseite mit axialen Schlitzen 4 b versehen (Fig. 2).

Der eingesetzte metallische Werkstoff für die Mitnehmer 4 ist vorzugsweise gleich dem des Walzzylinders (Werkstoff.-Nr.: 2.4816), welcher eine ausreichende Festigkeit bei den hohen Betriebstemperaturen aufweist.

Die Welle 5 verbindet einen stirnseitigen symbolisch angedeuteten Antrieb 9 mit den Mitnehmern 4 und trägt die Heizung 6 der Fig. 3 sowie deren Anschlüsse 6 a, b. Sie ist in Fest-Loslagern 12, 13 mit vorgespannten Präzisionsspindellagern, die eine axiale und radiale Spielfreiheit gewähren, gelagert. Das Drehmoment zwischen Welle 5 und Mitnehmern 4 wird dabei über einen Reibschluß (Verspannung der Komponenten) übertragen. Zum Schutz vor Korrosion und Verschleiß ist im Kontaktbereich dieser Komponenten eine Al₂O₃-Schicht auf der Welle aufgetragen.

Die Mitnehmer und die Welle 5 sind mittels Wellenmuttern 10 und Tellerfedern 11 axial miteinander verspannt und lassen daher aufgrund ihrer Anordnung unterschiedliche Wärmedehnungen zwischen Mitnehmern/Walzzylinder und Welle zu. Die Welle 5 übernimmt bei dieser Anordnung die Funktion eines Zugankers, was zu einer erhöhten Steifigkeit des Walzzylinders 3 führt.

Damit die - noch zu erläuternden - Stromzuführungen für die Heizung, die Kanäle der Luftkühlung und die Anschlüsse der Thermoelemente (Temperaturmessung) angeordnet werden können, ist die Welle 5 als Hohlwelle ausgeführt. Um die Leistungsverluste in der Welle bei elektrischer Beheizung gring zu halten, ist diese mit sechs gleichmäßig am Umfang verteilten Längsschlitzen 5 a (Fig. 1 A gefertigt; dies verhindert eine Ausbildung von Verlust-Induktionsströmen in der Welle.

Die Welle 5 besteht vorzugsweise aus dem hochwarmfesten Werkstoff Nr. 2.4879.

Die Heizung 6 ist in dem Bereich zwischen dem Walzzylinder 3 und der Welle 5 angeordnet. Als Heizleiter wirkt vorzugsweise ein PtRhlO Band 6 c (20x1.5mm), welches in Nuten 14 a eines Keramikzylinders 14 zu einer Spule gemäß Fig. 3 gewickelt ist.

Dieser Keramikzylinder 14 isoliert die Welle 5 sowohl elektrisch als auch thermisch gegenüber dem Heizleiter 6 c. Als Werkstoff für den Keramikzylinder kann insbesondere Quarzal Verwendung finden.

Elektrisch isoliert ist der Walzzylinder 3 gegenüber dem Heizleiter 6 c durch ein ca. 2 mm dickes Quarzglasrohr 15. Der geringe Abstand sorgt für eine schnelle und verlustarme Wärmeübertragung und die Transmissionseigenschaften des Quarzglases für einen guten Strahlungsaustausch.

Durch den vorstehenden geometrischen Aufbau ist sowohl eine indirekte (Widerstandsheizung) als auch eine direkte (Induktive Heizung) Beheizung des Walzzylinders 3 möglich. Die für den Fertigungsprozeß benötigte Wärme läßt sich in bekannter Weise durch Regulierung des Spannungspotentiäls bzw. der Stromstärke variieren.

Anstelle des Heizleiterbandes 6 c können auch andere Geometrien, insbesondere Draht-, Stangen- oder Rohrprofile Verwendung finden. Als Werkstoff sind auch, je nach thermischer Belastung, andere Heizleiterwerkstoffe, insbesondere Kanthal-, bzw. Nikrothallegierungen oder Edelmetalllegierungen einsetzbar.

Die Energiezufuhr der Heizung ist durch eine Schleifringkontakt-Anordnung 16 an einem Wellenende und über Stabelemente 6 a, b (Fig. 3) in der (Hohl)Welle 5 realisiert.

Die Fig. 4 zeigt in Draufsicht nähere Einzelheiten der Schleifringkontakt-Anordnung 16. Diese besteht grundsätzlich aus vier Doppelschenkelkohle-Halter 16 a mit Silbergraphitkohle 16 b, die paarweise jeweils auf einem Zylinderabschnitt 16 c schleifen, an den jeweils ein Ende der Stromzuführung 6 a, 6 b (Fig. 3) geführt ist. Klemmen 16 d dienen zum Anschluß der Versorgungsleitungen.

Um eine Überhitzung der Welle 5 zu verhindern, sind im Inneren der Welle zwei Keramikrohre 17 installiert, mittels dieser Rohre wird kühle Luft ins Zentrum der Welle eingeblasen, welche beidseitig wieder austreten kann. Ein Thermoelement 18 (Fig. 1 A) in der Mitte der Spule mit herausgeführtem Anschluß 18 a (Fig. 1) erschließt die Möglichkeit, die Temperatur zu überwachen und die Heizung zu regeln.

Diese Heizung kann als Ohmsche Widerstandsheizung (50 Hz) luftgekühlt betrieben werden. Optional ist als Beheizungsart eine Mittelfrequenz-Induktionsheizung einsetzbar, welche als elektrische Leiter entweder Kupfer (wassergekühlt) oder Edelmetall (ungekühlt) nutzt.

Die Heizung ist ein wesentlicher Bestandteil der erfindungsgemäßen Formgebungswalze, denn der Formgebungsprozeß durch Umformen, von dem die Erfindung ausgeht, verlangt ein gezieltes Wiederaufheizen des Glassubstrates. Dieses Wiederaufheizen erfolgt durch die gezielte Erwärmung des Walzzylinders 3 auf eine Temperatur, die größer als Tg, die Transformationstemperatur des zu strukturierenden Glases, ist. Zur Erzeugung von feinen, dem Formgebungswerkzeug nahen Strukturen nur an der Substratoberfläche ist eine genaue Temperaturführung notwendig, bei der die geringste Zähigkeit des Glases in der Grenzschicht Formgebungswerkzeug/Glas auftritt. Das erfordert eine höhere Werkzeugtemperatur im Vergleich zur Glastemperatur des typischerweise vorgewärmten Glassubstrates.

Andererseits wird durch das heiße Werkzeug ein Temperaturgradient in dem Substrat aufgebaut, der zu thermischen Spannungen führt. Die Notwendigkeit, zur Bruchvermeidung diese Spannungen zu minimieren, bestimmt die untere Grenze der Ausgangstemperatur des Glases vor der Formgebung. Sie liegt im Entspannungsbereich oberhalb des Tg-Punktes (bei einer Zähigkeit um 10E+12 dPa•s). Um dabei die Grundstruktur des Ausgangsmaterials möglichst wenig zu beeinflussen, ist die Ausgangstemperatur möglichst niedrig zu halten.

Für die Formgebung kommt es auf die Temperatur der an dem Umformprozeß durch Materialstransport beteiligten dünnen Oberflächenschicht des Glases an. Diese Formgebungstemperatur entspricht einer Mischtemperatur aus Werkzeug- und Glastemperatur vor dem Kontakt. Wesentliche weitere Beeinflussungen ergeben sich aus den Eigenschaften der Komponenten wie Wärmeleitfähigkeit und Wärmekapazität. Da während der gesamten Zeit des Formgebungsvorganges Wärme vom heißen Werkzeug in das kältere Werkstück strömt, ist zur Aufrechterhaltung des Materialflusses in die Nuten eine ständige Wärmezufuhr zum Werkzeug an der Kontaktstelle zu gewährleisten. Im vorliegenden Fall ist das durch die Innenbeheizung der Walze gegeben, die durch den massiven metallischen Hohlzylinder 7 eine hohe Wärmekapazität hat. Eine hohe Werkzeug- und damit Grenzflächentemperatur beschleunigt zwar den Formgebungsprozeß, aber auch die Durchheizung der in der Dicke begrenzten Probe, die dadurch so sehr an Stabilität verliert, daß eine Trennung von innig angeformtem Werkzeug und Probe ohne Zerstörung nicht mehr gelingt. Ursache der Destabilisierung bei Anhebung der Temperatur/Absenkung der Formgebungszeit ist in der stark gebogenen Zähigkeits-Temperatur-Kurve zu finden.

Die notwendige Formgebungszeit zum Ausformen einer gewünschten Struktur, insbesondere von Stegen mit Höhe > Breite, ergibt sich aus Strömungsvorgängen in einen Spalt. Einflußgrößen sind:
- Druck linear
- Zähigkeit linear
- Höhe quadratisch
- Breite quadratisch

Geeignete Verformungszeiten im Walzprozeß liegen bei einer Walze vom Durchmesser = 120 mm (formgebende Eingriffsbreite etwa 3 mm) bei etwa 1,5 Sekunden (Walzgeschwindigkeit = 2 mm/sec).

Die formgebenden Kräfte werden durch Anpressen der Formgebungswalze 1 an das erweichende (zähflüssige) Glas erzeugt. Sie treten damit als Binnendruck in einer Flüssigkeit und nicht als Spannungen auf, solange die Formgebungsgeschwindigkeiten klein genug bleiben. Der das Strömen des Glases in die Spalte 8 a des Werkzeugs auslösende Druck bestimmt sich damit als Kraft/Kontaktfläche der Walze auf dem Glas 2. Diese Fläche ist abhängig vom Walzendurchmesser und der Einsinktiefe der Walze und damit auch von der Formgebungstemperatur.

Die erfindungsgemäße Formgebungswalze ermöglicht durch ihren Aufbau eine geeignete Prozeßführung, die in bisher nicht möglicher Weise eine präzise Mikrostrukturierung durch präzise Einhaltung der vorgenannten Umformungsparameter zur Folge hat.

## Patentansprüche

1. Formgebungswerkzeug (1) mit strukturierter Oberfläche zum Erzeugen von Strukturen auf Glas (2), mit:
- einem Walzzylinder (3), bestehend aus einem metallischen Hohlzylinder (7), auf dessen Außenmantel ein formgebendes Blech (8), das mit Ausnehmungen (8 a) entsprechend dem Negativ der aufzubringenden Glasstrukturen versehen ist, im innigen flächigen Kontakt aufgebracht ist,
- einer Welle (5) zum kontinuierlichen Antrieb des Walzzylinders (3), die sich durch den metallischen Hohlzylinder (7) hindurcherstreckt,
- zwei Mitnehmern (4), die auf Höhe der Stirnseiten des metallischen Hohlzylinders (7) auf der Welle (5) fest angebracht sind und formschlüssig mit dem Hohlzylinder (7) im Wirkeingriff sind, und
- einer elektrischen Heizung (6), die elektrisch isoliert zwischen der Welle (5) und dem metallischen Hohlzylinder (7) angeordnet ist, mit einer zusätzlichen thermischen Isolierung zur Welle.

2. Formgebungswerkzeug nach Anspruch 1, **dadurch gekennzeichnet, daß** der Werkstoff des metallischen Hohlzylinders (7) eine Nickel-Knetlegierung, vorzugsweise eine solche mit der Werkstoff-Nr. 2.4816, ist.

3. Formgebungswerkzeug nach Anspruch 1 oder 2, **dadurch gekennzeichnet, daß** der Werkstoff des formgebenden Bleches (8) aus einem verschleißfesten, mikrostrukturierbaren, wärmeleitenden Material mit möglichst geringer Klebeneigung zum Glas besteht.

4. Formgebungswerkzeug nach Anspruch 3, **dadurch gekennzeichnet, daß** das Blech (8) aus einer PtAuS-Legierung besteht, mit einem reinen PtAu5-Material oder alternativ mit einem oxiddispergierten PtAu5-Material.

5. Formgebungswerkzeug nach Anspruch 3 oder 4, **dadurch gekennzeichnet, daß** das Blech (8) aus einem Basismaterial mit einer darauf angebrachten Beschichtung besteht.

6. Formgebungswerkzeug nach einem der Ansprüche 1 bis 5, **dadurch gekennzeichnet, daß** das formgebende Blech (8) auf den metallischen Hohlzylinder (7) heißisostatisch aufgepreßt (gehipt) ist.

7. Formgebungswerkzeug nach einem der Ansprüche 1 bis 6, **dadurch gekennzeichnet, daß** die strukturierenden Ausnehmungen (8 a) im formgebenden Blech (8) durch Präzisionsdrehen mit einem Diamantwerkzeug ausgebildet sind.

8. Formgebungswerkzeug nach einem der Ansprüche 1 bis 7, **dadurch gekennzeichnet, daß** die Mitnehmer (4) mindestens drei trapezförmige Klauen (4 a) symmetrisch verteilt aufweisen und an der Stirnseite des metallischen Hohlzylinders (7) komplementäre trapezförmige Ausnehmungen (3 a) ausgebildet sind, die mit den Klauen (4 a) mit kleinen Anlageflächen im gegenseitigen Wirkeingriff stehen.

9. Formgebungswerkzeug nach einem der Ansprüche 1 bis 8, **dadurch gekennzeichnet, daß** die Mitnehmer (4) hohlzylinderseitig axiale Schlitze (4 b) aufweisen.

10. Formgebungswerkzeug nach einem der Ansprüche 1 bis 9, **dadurch gekennzeichnet, daß** die Welle (5), als Hohlwelle ausgebildet, in Fest-Loslagern (12, 13) mit vorgespannten Spindellagern gelagert ist.

11. Formgebungswerkzeug nach einem der Ansprüche 1 bis 10, **dadurch gekennzeichnet, daß** die Mitnehmer (4) und die Welle (5) mittels Wellenmuttern (10) und Tellerfedern (11) axial im Sinne eines Zugankers miteinander verspannt sind.

12. Formgebungswerkzeug nach Anspruch 10 oder 11, **dadurch gekennzeichnet, daß** die Welle (5) mehrere, gleichmäßig am Umfang verteilte Längsschlitze (5 a) aufweist.

13. Formgebungswerkzeug nach einem der Ansprüche 1 bis 12, **dadurch gekennzeichnet, daß** auf die Welle (5) verdrehsicher ein Keramikzylinder (14) aufgeschoben ist, der an seinem Mantel die Heizleiter (6 c) der elektrischen Heizung (6) aufnimmt, und daß über den Keramikzylinder (14) mit den Heizleitern (6 c) ein Quarzglasrohr (15) zur elektrischen Isolation zu der benachbarten Hohlwalze (7) aufgeschoben ist.

14. Formgebungswerkzeug nach Anspruch 13, **dadurch gekennzeichnet, daß** als Heizleiter ein PtRh 10-Band (6 c) vorgesehen ist, das in Nuten (14 a) des Keramikzylinders (14) zu einer Spule gewickelt ist.

15. Formgebungswerkzeug nach einem der Ansprüche 1 bis 14, **dadurch gekennzeichnet, daß** zum Energieeintrag in die Heizung (6) auf der Welle (5) eine Schleifringanordnung (16) vorgesehen ist.

16. Formgebungswerkzeug nach Anspruch 10 oder einem der folgenden, **dadurch gekennzeichnet, daß** im Innern der Hohwelle (5) mindestens ein Keramikrohr (17) für die Zufuhr von Kühlluft vorgesehen ist.

17. Formgebungswerkzeug nach Anspruch 10 oder einem der folgenden, **dadurch gekennzeichnet, daß** im Innern der Hohlwelle (5) ein Thermoelement (18) installiert ist.

18. Anwendung des Formgebungswerkzeuges (1) nach einem der Ansprüche 1 bis 17 für die Ausbildung von Präzisionsstrukturen in einer Kanalplatte von Flachbildschirmen.

## Claims

1. Forming tool (1) with a structured surface for producing structures on glass (2), having
- a rolling cylinder (3), comprising a metallic hollow cylinder (7), to the outer lateral surface of which a forming metal sheet (8), which is provided with recesses (8a) corresponding to the negative of the glass structures which are to be applied, is applied in intimate surface-to-surface contact,
- a shaft (5) for continuously driving the rolling cylinder (3), which extends through the metallic hollow cylinder (7),
- two drivers (4) which are arranged fixedly on the shaft (5) at the level of the end sides of the metallic hollow cylinder (7), and are in operative positively-locking engagement with the hollow cylinder (7) and
- an electrical heater (6), which is arranged in an electrically insulated manner between the shaft (5) and the metallic hollow cylinder (7), with additional thermal insulation with respect to the shaft.

2. Forming tool according to Claim 1, **characterized in that** the material used for the metallic hollow cylinder (7) is a wrought nickel alloy, preferably a wrought nickel alloy of Materials No. 2.4816.

3. Forming tool according to Claim 1 or 2, **characterized in that** the material of the forming metal sheet (8) consists of a wear-resistant, thermally conductive material which can be microstructured and has as little tendency to adhere to the glass as possible.

4. Forming tool according to Claim 3, **characterized in that** the metal sheet (8) consists of a PtAu5 alloy, including a pure PtAu5 material or alternatively including an oxide-dispersed PtAu5 material.

5. Forming tool according to Claim 3 or 4, **characterized in that** the metal sheet (8) consists of a base material with a coating arranged thereon.

6. Forming tool according to one of Claims 1 to 5, **characterized in that** the forming metal sheet (8) is hot isostatically pressed (HIPped) onto the metallic hollow cylinder (7).

7. Forming tool according to one of Claims 1 to 6, **characterized in that** the structuring recesses (8a) in the shaping metal sheet (8) are formed by precision turning using a diamond tool.

8. Forming tool according to one of Claims 1 to 7, **characterized in that** the drivers (4) have at least three trapezium-shaped claws (4a) distributed symmetrically, and complementary trapezium-shaped recesses (3a), which are in murual operative engagement with the claws (4a) by means of small bearing surfaces, are formed on the end side of the metallic hollow cylinder (7).

9. Forming tool according to one of Claims 1 to 8, **characterized in that** the drivers (4) have axial slots (4b) on the hollow cylinder side.

10. Forming tool according to one of Claims 1 to 9, **characterized in that** the shaft (5), which is designed as a hollow shaft, is mounted in fixed/floating bearings (12, 13) with prestressed spindle bearings.

11. Forming tool according to one of Claims 1 to 10, **characterized in that** the drivers (4) and the shaft (5) are axially clamped to one another by means of shaft nuts (10) and cup springs (11) acting as a tie rod.

12. Forming tool according to Claim 10 or 11, **characterized in that** the shaft (5) has a plurality of longitudinal slots (5a) distributed uniformly over the circumference.

13. Forming tool according to one of Claims 1 to 12, **characterized in that** a ceramic cylinder (14) is pushed onto the shaft (5) in a torsion-resistant manner, which ceramic cylinder, on its outer surface accommodates the heating conductors (6c) of the electrical heater (6), and **in that** a quartz glass tube (15) is pushed over the ceramic cylinder (14) with the heating conductors (6c) in order to provide electrical insulation with respect to the adjacent hollow roller (7).

14. Forming tool according to Claim 13, **characterized in that** the heating conductor provided is a PtRh 10 strip (6c) which is wound into a coil in grooves (14a) in the ceramic cylinder (14).

15. Forming tool according to one of Claims 1 to 14, **characterized in that** a slip ring arrangement (16) is provided on the shaft (5) for the purpose of introducing energy into the heater (6).

16. Forming tool according to Claim 10 or any of the following claims, **characterized in that** at least one ceramic tube (17) for supplying cooling air is provided in the interior of the hollow shaft (5).

17. Forming tool according to Claim 10 or any of the following claims, **characterized in that** a thermocouple (18) is installed in the interior of the hollow shaft (5).

18. Use of the forming tool (1) according to one of Claims 1 to 17 to form precision structures in a channel plate of flat screens.

## Revendications

1. Outil de formage (1) à surface structurée pour produire des structures sur du verre (2), avec :
- un cylindre de laminage (3), se composant d'un cylindre métallique creux (7), sur la surface latérale extérieure duquel une tôle de formage (8), qui est pourvue d'évidements (8a) correspondant au négatif des structures à appliquer sur le verre, est appliquée avec une mise en contact superficielle étroite,
- un arbre (5) pour l'entraînement continu du cylindre de laminage (3), qui s'étend à travers le cylindre métallique creux (7),
- deux têtes d'entraînement (4), qui sont montées sur l'arbre (5) à hauteur des faces d'extrémité du cylindre métallique creux (7) et sont en prise active par correspondance géométrique avec le cylindre creux (7), et
- un chauffage électrique (6), qui est disposé avec une isolation électrique entre l'arbre (5) et le cylindre métallique creux (7), avec une isolation thermique supplémentaire par rapport à l'arbre.

2. Outil de formage suivant la revendication 1, **caractérisé en ce que** la matière du cylindre métallique creux (7) est un alliage de nickel corroyé, de préférence un alliage portant le numéro de matière 2.4816.

3. Outil de formage suivant la revendication 1 ou 2, **caractérisé en ce que** la matière de la tôle de formage (8) se compose d'un matériau résistant à l'usure, conducteur de la chaleur et pouvant être microstructuré, avec une tendance aussi faible que possible à coller au verre.

4. Outil de formage suivant la revendication 3, **caractérisé en ce que** la tôle (8) se compose d'un alliage PtAu5, avec un matériau PtAu5 pur ou en variante avec un matériau PtAu5 contenant des oxydes dispersés.

5. Outil de formage suivant la revendication 3 ou 4, **caractérisé en ce que** la tôle (8) se compose d'un matériau de base avec un revêtement appliqué sur celui-ci.

6. Outil de formage suivant l'une quelconque des revendications 1 à 5, **caractérisé en ce que** la tôle de formage (8) est pressée isostatiquement à chaud sur le cylindre métallique creux (7).

7. Outil de formage suivant l'une quelconque des revendications 1 à 6, **caractérisé en ce que** les évidements structurants (8a) sont formés dans la tôle de formage (8) par un tournage de précision avec un outil diamanté.

8. Outil de formage suivant l'une quelconque des revendications 1 à 7, **caractérisé en ce que** les têtes d'entraînement (4) présentent au moins trois griffes trapézoïdales (4a) réparties symétriquement et que des évidements trapézoïdaux complémentaires (3a) sont formés dans la face d'extrémité du cylindre métallique creux (7), qui sont en prise active réciproque avec les griffes (4a) par de petites faces d'appui.

9. Outil de formage suivant l'une quelconque des revendications 1 à 8, **caractérisé en ce que** les têtes d'entraînement (4) présentent des fentes axiales (4b) du côté du cylindre creux.

10. Outil de formage suivant l'une quelconque des revendications 1 à 9, **caractérisé en ce que** l'arbre (5), ayant la forme d'un arbre creux, est supporté dans des paliers libres-fixes (12, 13) avec des roulements de broche précontraints.

11. Outil de formage suivant l'une quelconque des revendications 1 à 10, **caractérisé en ce que** les têtes d'entraînement (4) et l'arbre (5) sont serrés l'un sur l'autre au moyen d'écrous d'arbre (10) et de ressorts à disque (11) dans le sens axial à la manière d'untirant.

12. Outil de formage suivant la revendication 10 ou 11, **caractérisé en ce que** l'arbre (5) présente plusieurs fentes longitudinales (5a) réparties uniformément à la périphérie.

13. Outil de formage suivant l'une quelconque des revendications 1 à 12, **caractérisé en ce qu'**un cylindre céramique (14), qui reçoit sur sa surface latérale les conducteurs chauffants (6c) du chauffage électrique (6), est glissé sans rotation sur l'arbre (5), et **en ce qu'**un tube en verre de quartz (15) est glissé sur le cylindre céramique (14) avec les conducteurs chauffants (6c) pour assurer l'isolation électrique par rapport au cylindre creux voisin (7).

14. Outil de formage suivant la revendication 13, **caractérisé en ce qu'**il est prévu comme conducteur chauffant (6c) un ruban de PtRh 10, qui est enroulé en bobine dans des encoches (14a) du cylindre céramique (14).

15. Outil de formage suivant l'une quelconque des revendications 1 à 14, **caractérisé en ce qu'**il est prévu un agencement à bague glissante (16) sur l'arbre (5) pour l'alimentation du chauffage (6) en énergie.

16. Outil de formage suivant la revendication 10 ou l'une des suivantes, **caractérisé en ce qu'**il est prévu au moins un tube céramique (17) à l'intérieur de l'arbre creux (5) pour l'arrivée d'air de refroidissement.

17. Outil de formage suivant la revendication 10 ou l'une des suivantes, **caractérisé en ce qu'**un thermocouple (18) est installé à l'intérieur de l'arbre creux (5).

18. Utilisation de l'outil de formage (1) suivant l'une quelconque des revendications 1 à 17, pour le façonnage de structures de précision dans une plaque de canaux d'écrans cathodiques plats.
